# FASCICULE DE BREVET EUROPEEN

(11) **EP 1 242 271 B1**
(45) Date de publication et mention de la délivrance du brevet: **23.03.2005**
(21) Numéro de dépôt: 00990089.5
(22) Date de dépôt: 21.12.2000
(51) Int. Cl.: B60S 1/34

(54) **MECANISME D'ESSUIE-GLACE A BALAYAGE LINEAIRE ALTERNE COMPORTANT DES MOYENS PERFECTIONNES DE GUIDAGE DU CHARIOT DANS SON RAIL DE GUIDAGE**
LINEARWISCHERANLAGE MIT VERBESSERTEM FÜHRUNGSMITTEL DES WAGENS IN DER FÜHRUNGSSCCHIENE
RECIPROCATING LINEAR SWEEPING WIPER MECHANISM COMPRISING IMPROVED MEANS GUIDING THE CARRIAGE IN ITS GUIDE RAIL

(30) Priorité: 27.12.1999 FR 9916513
(43) Date de publication de la demande: 25.09.2002
(73) Titulaire: VALEO SYSTEMES D'ESSUYAGE, 78321 La Verrière (FR)
(72) Inventeur: HOSPITAL, Eric, F-78180 Montigny le Bretonneux (FR)
(86) Numéro de dépôt international: PCT/FR2000/003627
(87) Numéro de publication internationale: WO 2001/047758

(56) Documents cités:
- WO-A-86/00052
- DE-C- 947 532
- DE-C- 962 317
- FR-A- 1 121 126

## Description

La présente invention concerne un mécanisme d'essuie-glace à balayage linéaire alterné de véhicule automobile.

L'invention vise notamment à permettre l'essuyage d'un pare-brise ou d'une lunette arrière de véhicule automobile.

Selon la conception la plus répandue dans le domaine de la construction automobile, chaque essuie-glace effectue un balayage alterné de la vitre à essuyer dans un mouvement de rotation alternée autour d'un axe sensiblement fixe par rapport à la structure d'encadrement de la vitre.

Un tel balayage, qu'il soit effectué au moyen d'un seul essuie-glace ou de deux essuie-glace à balayages parallèles ou antagonistes, laisse des parties relativement importantes de la vitre non essuyées.

Afin de remédier à ces inconvénients, il a déjà été proposé des mécanismes complexes visant à déplacer l'axe d'articulation de chaque bras d'essuie-glace afin d'accroître la surface effectivement essuyée.

Selon une autre conception, qui est par exemple décrite et représentée dans les documents DE-A-4.234.202 ou FR-A-2.658.460, il a été proposé d'effectuer un balayage linéaire alterné de la vitre à essuyer au moyen d'un mécanisme d'essuie-glace du type comportant un chariot de guidage et d'entraînement qui est monté coulissant par rapport à la caisse du véhicule sur au moins un rail de guidage, ou équivalent, qui s'étend le long de la vitre à essuyer, le long du bord inférieur ou supérieur de cette vitre, ou simultanément le long des deux bords parallèles de la vitre.

Le chariot porte une extrémité proximale d'un bras ou d'un balai d'essuie-glace dont l'extrémité distale porte une raclette d'essuyage de la vitre.

Selon une autre conception, le mécanisme d'essuie-glace comporte aussi des moyens d'entraînement du chariot comprenant par exemple un organe souple d'entraînement en boucle fermée tendu entre deux poulies et qui est relié au chariot, et un moteur d'entraînement qui transmet un mouvement de défilement à l'organe souple d'entraînement.

Grâce à une telle conception, le balai d'essuie-glace porté par le bras d'essuie-glace, ou directement par le chariot, peut effectuer un balayage quasi complet de la vitre à essuyer dont le contour est généralement sensiblement rectangulaire.

Selon une autre conception d'un mécanisme d'essuie-glace à balayage linéaire alterné décrite et représentée dans le document FR-A-2.027.739, celui-ci comporte un chariot de guidage et d'entraînement qui est monté coulissant sur au moins un rail rigide de guidage et qui porte au moins un balai d'essuie-glace, le mécanisme étant du type comportant des moyens d'entraînement du chariot comprenant un moteur électrique qui entraîne en rotation un organe allongé formant vis sans fin qui s'étend le long du rail de guidage et qui traverse un écrou complémentaire porté par le chariot.

Ainsi, dans toutes ces conceptions connues, le chariot de guidage et d'entraînement est monté coulissant le long d'au moins un rail rigide de guidage qui est réalisé sous la forme d'un profilé.

Le guidage du chariot sur le rail en forme de profilé s'effectue de préférence à l'intérieur du profilé, afin de guider le chariot de manière précise en appliquant un effort d'essuyage suffisant sur la raclette d'essuyage et de manière à effectuer le guidage dans une zone interne protégée des pollutions et saletés.

Dans ce but, le document GB-A-887.114 décrit et représente un mécanisme d'essuie-glace à balayage linéaire alterné du type comportant un chariot de guidage et d'entraînement qui porte au moins un organe d'essuyage, notamment un bras ou un balai d'essuie-glace, et qui est monté coulissant à l'intérieur d'un rail longitudinal rigide de guidage réalisé sous la forme d'un profilé creux qui, en section transversale, comporte deux glissières latérales opposées en forme de C ouvertes transversalement en vis-à-vis l'une de l'autre et dont chacune reçoit au moins un élément complémentaire de stabilisation porté par une plaque de châssis du chariot logée au moins en partie à l'intérieur du rail de guidage et qui s'étend dans un plan longitudinal horizontal sensiblement parallèle au plan d'essuyage, et du type dans lequel la plaque de châssis porte des moyens de guidage longitudinal qui coopèrent avec des moyens complémentaires du profilé pour déterminer la position transversale de la plaque de châssis par rapport au profilé.

Selon la conception proposée dans ce document, les éléments de stabilisation sont des roulettes montées à rotation sur la plaque de châssis, autour d'axes horizontaux, et les moyens de guidage sont également constitués par un jeu de roulettes, portées à rotation par la plaque de châssis autour d'axes verticaux, qui roulent dans des gouttières complémentaires du profilé.

Il en résulte une conception complexe du profilé, un grand nombre de composants montés à rotation et donc susceptibles de s'user en faisant apparaître des jeux néfastes au bon guidage du chariot, ou qui peuvent se bloquer en augmentant la traînée globale de frottement du chariot par rapport au rail de guidage.

Afin de remédier à ces inconvénients, l'invention propose un mécanisme du type de celui décrit et représenté dans le document GB-A-887.114 et tel que défini dans la revendication 1.

Selon des modes de réalisation de l'invention :
- la rainure de guidage appartient à la plaque de châssis du chariot et est agencée sous une face inférieure de cette plaque pour recevoir en coulissement une nervure formée en relief vers le haut sur une face interne du profilé ;
- la rainure appartient à un élément moulé, notamment en matière plastique, rapporté sur la plaque de châssis, notamment sous la forme d'un élément surmoulé sur la plaque ;
- chaque patin de stabilisation est reçu sans jeu, selon la direction verticale, dans la glissière correspondante en forme de C ;
- chaque patin est déformable élastiquement pour permettre un basculement limité de la plaque de châssis autour d'un axe horizontal sensiblement longitudinal ;
- la surface périphérique externe de chaque patin de stabilisation qui coopère avec les faces horizontales internes parallèles et opposées de la glissière correspondante en forme de C comporte un revêtement à faible coefficient de friction ;
- chaque patin de stabilisation est en forme générale d'une bague aplatie qui est montée sur un doigt de la plaque de châssis qui s'étend transversalement à l'intérieur de la glissière correspondante en forme de C ;
- l'une des faces horizontales internes parallèles et opposées de la glissière en forme de C est constituée par les bords libres coplanaires d'au moins une nervure longitudinale du profilé ;
- la plaque de châssis du chariot porte au moins deux patins de stabilisation agencés en triangle parmi lesquels deux des patins sont reçus en coulissement dans l'une des glissières, tandis que le troisième patin de stabilisation est reçu en coulissement dans l'autre des deux glissières en forme de C ;
- la nervure de guidage est reçue sans jeu selon la direction transversale à l'intérieur de la rainure complémentaire de guidage ;
- la plaque de châssis est réalisée en tôle découpée, pliée et/ou emboutie, extrudée, tronçonnée, poinçonnée, moulée en alliage d'aluminium ou en plastique permettant d'obtenir des patins et glissières monobloc facilitant le recyclage ;
- la plaque de châssis comporte des moyens pour sa liaison avec un élément souple d'entraînement du chariot ;
- le profilé est réalisé en une seule pièce, notamment par extrusion ou par moulage ;
- le profilé comporte une aile inférieure horizontale continue à partir de laquelle s'étendent les glissières de stabilisation en forme De C, et en ce que la face supérieure du profilé comporte au moins une fente longitudinale pour le passage vers l'extérieur du rail d'une patte qui relie la plaque de châssis à l'organe d'essuyage.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective en vue de dessus d'un tronçon du profilé du rail de guidage selon l'invention en association avec le chariot complémentaire de guidage ;
- la figure 2 est une vue en perspective de dessous de l'ensemble illustré à la figure 1 ; et
- la figure 3 est une vue en section partielle par un plan transversal passant par deux patins de stabilisation.

Dans la description qui va suivre, des éléments ou composants identiques, similaires ou analogues seront désignés par les mêmes chiffres de référence.

On utilisera, à titre non limitatif de l'invention, les termes « vertical », « horizontal », « supérieur », « inférieur », etc... en référence aux figures.

On a représenté sur les figures certains composants d'un mécanisme d'essuie-glace à balayage linéaire alterné 10 et notamment un rail de guidage 12 réalisé sous la forme d'un profilé longitudinal, ici à titre d'exemple rectiligne, et un chariot 14 de guidage et d'entraînement d'un organe d'essuyage 20 dont un tronçon est représenté, qui est par exemple un bras d'essuie-glace, un balai d'essuie-glace, ou directement un élément d'essuyage sous la forme d'une lame d'essuyage en matériau souple.

Le chariot 14 est constitué pour l'essentiel par une plaque de châssis 16 qui s'étend horizontalement en référence aux figures et qui est réalisée notamment par découpe et pliage d'une plaque de tôle épaisse.

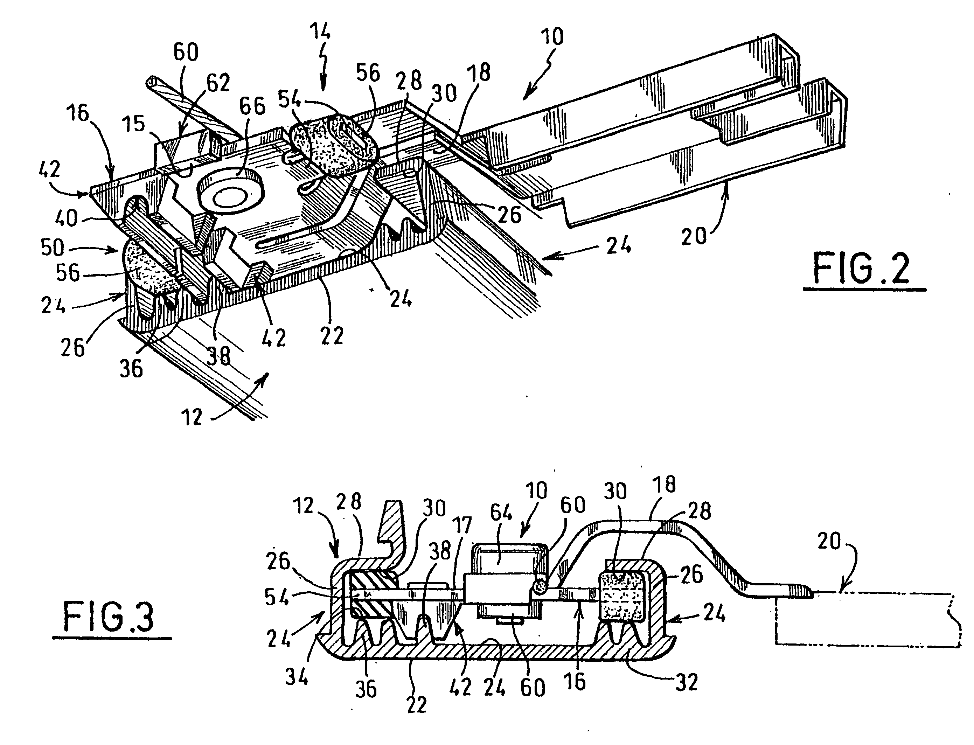

A partir de la plaque 16, le chariot 14 comporte une patte de raccordement 18 qui s'étend à l'extérieur du profilé 12 et qui est pliée pour être prolongée par l'élément d'essuyage 20 représenté en silhouette à la figure 3.

La conformation du chariot avec sa plaque de châssis 16 est telle que la plaque de châssis horizontale 16 s'étend sensiblement dans un plan parallèle au plan de la vitre à essuyer (non représentée).

Le profilé 12 est réalisé par exemple en métal par extrusion, ou en matière plastique renforcée par extrusion ou par moulage, et il est constitué pour l'essentiel par une aile inférieure horizontale pleine et continue 22 qui est délimitée verticalement vers le haut par une face supérieure horizontale 24 interne au profilé 12.

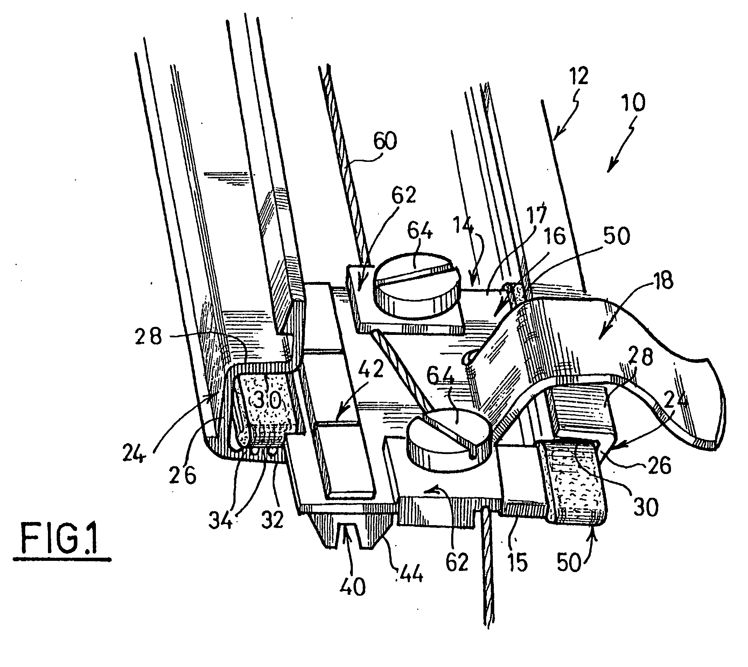

L'aile 22 comporte, agencées à chacune de ses deux extrémités transversales opposées gauche et droite en considérant les figures 1 à 3, deux glissières latérales opposées 24 dont chacune présente, en section transversale, sensiblement la forme d'un C ouvert transversalement vers l'intérieur du profilé 12.

Ainsi, chaque glissière 24 comporte une joue latérale verticale 26 correspondant à la branche verticale du C, une aile supérieure horizontale 28 délimitant une face horizontale interne et inférieure 30, et une aile horizontale inférieure 32 qui s'étend dans le prolongement de l'aile inférieure principale 22 du profilé.

La face horizontale supérieure interne de l'aile 32 est en fait constituée par les bords supérieurs libres coplanaires 34 d'au moins une nervure longitudinale parallèle 36 qui sont formées en relief sur la face supérieure interne 24 de l'aile 22.

Afin de positionner transversalement la plaque de châssis 16 à l'intérieur du profilé 12, et conformément aux enseignements de l'invention, la face supérieure interne 24 de l'aile principale 22 du profilé 12 comporte une nervure longitudinale rectiligne 38 qui s'étend verticalement en relief vers le haut et qui est reçue, sans jeu transversal, dans une rainure longitudinale rectiligne complémentaire 40 agencée sous la face inférieure 15 de la plaque de châssis 16.

Plus précisément, la rainure 40 est une rainure débouchant verticalement vers le bas qui est formée dans un élément de guidage 42 qui est par exemple une pièce moulée en matière plastique rapportée sur la plaque 16, par exemple par surmoulage sur cette dernière.

La pièce 42 comporte des nervures de renfort 44 afin d'éviter qu'elle ne se déforme, c'est-à-dire pour que la rainure 40 conserve des dimensions transversales constantes pour éviter toute prise de jeu selon la direction horizontale transversale de manière à garantir un positionnement précis et un bon guidage longitudinal du chariot 14 par rapport au profilé 12.

Pour stabiliser le chariot 14 en coulissement à l'intérieur du profilé 12, c'est-à-dire pour éviter qu'il ne bascule de manière intempestive autour d'un axe théorique horizontal et longitudinal en réaction à l'effort d'essuyage, il est prévu des moyens de stabilisation constitués ici par trois patins de stabilisation 50.

Les patins de stabilisation 50 sont agencés en triangle, c'est-à-dire que la plaque de châssis 16 porte d'un côté, à gauche en considérant les figures, un patin central 50 reçu dans la glissière de guidage 24 de gauche, tandis que son bord transversal opposé de droite porte deux patins de stabilisation 50, espacés longitudinalement et qui sont tous deux reçus simultanément dans l'autre glissière de guidage de droite 24.

Comme on peut le voir à la figure 3, le corps de chaque patin de guidage 50 est de préférence constitué par une bague aplatie 52 en matériau déformable élastiquement, par exemple en matériau élastomère, qui est enfilée transversalement sur un doigt 54 constitué par une patte venue de découpe de la plaque 16.

Chaque bague ou anneau aplatie 52 est revêtu d'une couche 56 en matériau à faible coefficient de friction.

Le dimensionnement de chaque patin de stabilisation 50 est tel qu'il est monté sans jeu selon la direction verticale entre les faces internes en vis-à-vis supérieure 30 et inférieure 34 de la glissière en forme de C 24 de façon à assurer un bon guidage et une bonne stabilisation de la plaque 16 par rapport au profilé 12.

La capacité de déformation élastique de chaque patin de stabilisation 50, comportant une bague ou anneau aplati 52 en matériau élastomère, permet d'encaisser temporairement des efforts exceptionnels appliqués au chariot dans le sens du basculement autour d'un axe horizontal, tout en assurant une bonne précision de guidage en coulissement en usage normal.

Comme on peut le voir notamment aux figures 1 et 2, la plaque de châssis 16 du chariot de guidage 14 comporte aussi des moyens pour assurer sa liaison en translation avec un élément souple 60 d'entraînement en coulissement du chariot 14 par rapport au profilé 12 qui est ici constitué par un câble 60.

Le câble 60 passe au dessus de la face supérieure 17 de la plaque 16 et il est monté serré par deux pinces, longitudinalement espacées, 62 et au moyen de vis d'orientation verticale 64 qui traversent les pinces 62 et dont chacune est montée vissée à travers la plaque 16 dans un écrou inférieur 66 agencé sous la face inférieure 15 de la plaque 16.

Afin d'assurer un bon positionnement et un bon serrage du câble 60 par les pinces 62, celles-ci sont immobilisées en rotation autour de leur axe de serrage grâce à des découpes complémentaires (non représentées) formées dans la plaque 16.

Grâce aux agencements selon l'invention, le guidage du chariot 14 par sa plaque de châssis 16 à l'intérieur du profilé 12 est précis selon la direction transversale, c'est-à-dire sans jeu selon cette direction, et il est stabilisé grâce aux patins 50, et ceci sans recourir à aucun élément tournant tel qu'une ou plusieurs roues ou roulettes comme dans l'état de la technique.

L'invention trouve à s'appliquer à tout type de mécanisme d'essuie-glace du type à balayage linéaire, et notamment quelle que soit l'orientation du profilé dans l'espace, la notion d'orientation horizontale n'ayant été ici choisie qu'en référence aux figures pour faciliter la description et la rédaction des revendications.

L'invention n'est pas limitée au mode de réalisation qui vient d'être décrit.

L'agencement complémentaire de la nervure 38 et de la rainure 40 peut bien entendu être inversé, c'est-à-dire que la rainure 40 peut être réalisée venue de matière par extrusion avec le profilé 12 tandis que la nervure de guidage est alors portée par la face inférieure 15 de la plaque de châssis 16 du chariot 14.

Il est aussi possible d'inverser la conception des patins de stabilisation et des glissières en C qui les reçoivent.

A cet effet, il est possible de conformer les bords latéraux opposés de la plaque de châssis 16 en forme de glissière à section en C qui reçoivent alors des patins de stabilisation réalisés sous la forme d'ailes horizontales continues du profilé, les éléments déformables élastiquement en matériau élastomère et les revêtements de friction étant alors agencés dans les glissières, de longueur réduite, portées par la plaque de châssis 16.

De même, l'invention n'est pas limitée au choix de matériaux qui ont été mentionnés précédemment.

Par ailleurs, le parfait positionnement transversal de la plaque de châssis 16 par rapport au profilé 12, grâce à la coopération de la nervure 38 et de la rainure 40, évite tout frottement parasite des faces latérales externes des patins 50 avec les faces latérales internes en vis-à-vis des joues verticales 26 des glissières en forme de C 24.

## Revendications

1. Mécanisme (10) d'essuie-glace à balayage linéaire alterné du type comportant :
- un chariot (14) de guidage et d'entraînement qui porte au moins un organe d'essuyage (20), notamment un bras ou un balai d'essuie-glace, et qui est monté coulissant à l'intérieur d'un rail longitudinal rigide de guidage réalisé sous la forme d'un profilé creux (12) ;
- une plaque de châssis (16) du chariot (14) logée au moins en partie à l'intérieur du rail de guidage et qui s'étend dans un plan longitudinal horizontal sensiblement parallèle au plan d'essuyage,
- deux glissières latérales opposées (24) en forme de C ouvertes transversalement ménagées soit en vis-à-vis l'une de l'autre sur le profil creux soit sur les bords latéraux opposés de la plaque de châssis (16);
- au moins un élément complémentaire (50) de stabilisation reçu par les glissières et soit porté par la plaque de châssis (16), soit réalisé sous la forme d'une aile horizontale continue du profilé creux,
et du type dans lequel la plaque de châssis (16) porte des moyens (40) de guidage longitudinal qui coopèrent avec des moyens complémentaires (38) du profilé (12,22) pour déterminer la position transversale de la plaque de châssis (16) par rapport au profilé (12), **caractérisé en ce que** les moyens de positionnement transversal de la plaque de châssis (16) par rapport au profilé (12, 22) comporte une nervure rigide (38) d'orientation longitudinale portée par le profilé (12, 22), ou par la plaque de châssis, qui est reçue en coulissement longitudinal dans une rainure longitudinale (40) complémentaire ouverte verticalement portée par la plaque de châssis (16), ou le profilé respectivement, et **en ce que** chaque élément de stabilisation est un patin de stabilisation (50) qui est reçu en coulissement longitudinal à l'intérieur de la glissière correspondante (24) en forme de C.

2. Mécanisme d'essuie-glace selon la revendication précédente, **caractérisé en ce que** la rainure de guidage (40) appartient à la plaque de châssis (16) du chariot (14) et est agencée sous une face inférieure (15) de cette plaque (16) pour recevoir en coulissement une nervure (38) formée en relief vers le haut sur une face interne (24) du profilé (12,22).

3. Mécanisme d'essuie-glace selon la revendication précédente, **caractérisé en ce que** la rainure (40) appartient à un élément moulé (42), notamment en matière plastique, rapporté sur la plaque de châssis (16), notamment sous la forme d'un élément surmoulé sur la plaque.

4. Mécanisme d'essuie-glace selon l'une quelconque des revendications précédentes, **caractérisé en ce que** chaque patin de stabilisation (50) est reçu sans jeu, selon la direction verticale, dans la glissière correspondante (24) en forme de C.

5. Mécanisme selon la revendication précédente, **caractérisé en ce que** chaque patin (50, 52) est déformable élastiquement pour permettre un basculement limité de la plaque de châssis autour d'un axe horizontal sensiblement longitudinal.

6. Mécanisme selon l'une quelconque des revendications précédentes, **caractérisé en ce que** la surface périphérique externe de chaque patin de stabilisation (50) qui coopère avec les faces horizontales internes parallèles et opposées (30, 34) de la glissière correspondante (24) en forme de C comporte un revêtement (56) à faible coefficient de friction.

7. Mécanisme selon l'une quelconque des revendications précédentes, **caractérisé en ce que** chaque patin de stabilisation (50) est en forme générale d'une bague aplatie (52) qui est montée sur un doigt (54) de la plaque de châssis qui s'étend transversalement à l'intérieur de la glissière correspondante (24) en forme de C.

8. Mécanisme selon l'une quelconque des revendications précédentes, **caractérisé en ce que** l'une des faces horizontales internes parallèles et opposées de la glissière en forme de C (24) est constituée par les bords libres coplanaires (34) de deux nervures longitudinales (32) du profilé (12, 22).

9. Mécanisme selon l'une quelconque des revendications précédentes, **caractérisé en ce que** la plaque de châssis (16) du chariot (14) porte trois patins de stabilisation (50) agencés en triangle parmi lesquels deux des patins sont reçus en coulissement dans l'une des glissières (24), tandis que le troisième patin de stabilisation est reçu en coulissement dans l'autre des deux glissières en forme de C.

10. Mécanisme selon l'une quelconque des revendications précédentes, **caractérisé en ce que** la nerve de guidage (38) est reçue sans jeu selon la direction transversale à l'intérieur de la rainure complémentaire de guidage (40).

11. Mécanisme selon l'une quelconque des revendications précédentes, **caractérisé en ce que** la plaque de châssis (16) est réalisée en tôle découpée, pliée et/ou emboutie.

12. Mécanisme selon l'une quelconque des revendications précédentes, **caractérisé en ce que** la plaque de châssis (16) comporte des moyens (62) pour sa liaison avec un élément souple (60) d'entraînement du chariot.

13. Mécanisme selon l'une quelconque des revendications précédentes, **caractérisé en ce que** les profilé (12) est réalisé en une seule pièce, notamment par extrusion ou par moulage.

14. Mécanisme selon l'une quelconque des revendications précédentes, **caractérisé en ce que** le profilé (12) comporte une aile inférieure horizontale (22) continue à partir de laquelle s'étendent les glissières de stabilisation en forme de C (24), et **en ce que** la face supérieure du profilé (12) comporte au moins une fente longitudinale pour le passage vers l'extérieur du rail d'une patte (18) qui relie la plaque de châssis (16) à l'organe d'essuyage.

## Patentansprüche

1. Scheibenwischermechanismus (10) mit alternierendem linearen Wischen, von der Art, umfassend:
- einen Führungs- und Antriebsschlitten (14), der wenigstens ein Abwischorgan (20) trägt, insbesondere einen Arm oder einen Scheibenwischer, und der gleitend im Innern einer länglichen steifen Führungsschiene in Form eines hohlen Profils (12) realisiert ist;
- eine wenigstens teilweise im Innern der Führungsschiene untergebrachte Rahmenplatte (16) des Schlittens (14), die sich in einer horizontalen länglichen, zur Wischebene deutlich parallelen Ebene erstreckt;
- zwei seitliche entgegen gesetzte offene, transversal, entweder einander gegenüber auf dem hohlen Profil oder auf den seitlichen entgegen gesetzten Rändern der Rahmenplatte (16) ausgesparte Führungen (24) in C-Form;
- wenigstens ein von den Führungen aufgenommenes und entweder von der Rahmenplatte (16) getragenes oder in Form eines horizontalen, kontinuierlichen Flügels des hohlen Profils realisiertes komplementäres Stabilisierungselement (50);
und von der Art, in der die Rahmenplatte (16) längliche Führungsmittel (40) trägt, die mit komplementären Mitteln (38) des Profils (12, 22) zusammenwirken, um die transversale Position der Rahmenplatte (16) im Verhältnis zum Profil (12) zu bestimmen, **dadurch gekennzeichnet, dass** die Mittel der transversalen Positionierung der Rahmenplatte (16) im Verhältnis zum Profil (12, 22) eine vom Profil (12, 22) oder von der Rahmenplatte getragene steife Rippe (38) länglicher Ausrichtung umfasst, die in länglichem Gleiten in einer komplementären offenen vertikal, von der Rahmenplatte (16) oder jeweils dem Profil getragenen länglichen Rille (40) aufgenommen wird, und dass jedes Stabilisierungselement ein Stabilisierungsfuß (50) ist, der in länglichem Gleiten im Innern der entsprechenden Führung (24) in C-Form aufgenommen wird.

2. Scheibenwischermechanismus gemäß dem vorherigen Anspruch, **dadurch gekennzeichnet, dass** die Führungsrille (40) zur Rahmenplatte (16) des Schlittens (14) gehört und unter einer unteren Seite (15) dieser Platte (16) angeordnet ist, um gleitend eine im Relief nach oben auf einer inneren Seite (24) des Profils (12, 22) geformten Rippe (38) aufzunehmen.

3. Scheibenwischermechanismus gemäß dem vorherigen Anspruch, **dadurch gekennzeichnet, dass** die Rille (40) zu einem abgeformten Element (42), insbesondere aus auf die Rahmenplatte (16) übertragenem Plastikmaterial, insbesondere in Form eines auf die Platte aufgeformten Elements gehört.

4. Scheibenwischermechanismus gemäß einem der vorherigen Ansprüche, **dadurch gekennzeichnet, dass** jeder Stabilisierungsfuß (50) ohne Spiel gemäß der vertikalen Richtung in der entsprechenden Führung (24) in C-Form aufgenommen wird.

5. Mechanismus gemäß dem vorherigen Anspruch, **dadurch gekennzeichnet, dass** jeder Fuß (50, 52) elastisch verformbar ist, um ein begrenztes Kippen der Rahmenplatte um eine deutlich längliche horizontale Achse zu erlauben.

6. Mechanismus gemäß einem der vorherigen Ansprüche, **dadurch gekennzeichnet, dass** die peripherische äußere Fläche jedes Stabilisierungsfußes (50), der mit den horizontalen inneren parallelen und entgegen gesetzten Seiten (30, 34) der entsprechenden Führung (24) in C-Form zusammenwirken, eine Verkleidung (56) mit geringem Reibungskoeffizienten umfasst.

7. Mechanismus gemäß einem der vorherigen Ansprüche, **dadurch gekennzeichnet, dass** jeder Stabilisierungsfuß (50) eine allgemeine Form eines abgeflachten Rings (52) aufweist, der auf einen Finger (54) der Rahmenplatte montiert ist, der sich transversal im Innern der entsprechenden Führung (24) in C-Form erstreckt.

8. Mechanismus gemäß einem der vorherigen Ansprüche, **dadurch gekennzeichnet, dass** eine der horizontalen inneren parallelen und entgegen gesetzten Seiten der Führung in C-Form (24) durch die koplanaren freien Ränder (34) von zwei länglichen Rippen (32) des Profils (12, 22) gebildet wird.

9. Mechanismus gemäß einem der vorherigen Ansprüche, **dadurch gekennzeichnet, dass** die Rahmenplatte (16) des Schlittens (14) drei dreieckig angeordnete Stabilisierungsfüße (50) trägt, von denen zwei Füße gleitend in einer der Führungen (24) aufgenommen werden, während der dritte Stabilisierungsfuß gleitend in der anderen der beiden Führungen in C-Form aufgenommen wird.

10. Mechanismus gemäß einem der vorherigen Ansprüche, **dadurch gekennzeichnet, dass** die Führungsrippe (38) ohne Spiel gemäß der transversalen Richtung im Innern der komplementären Führungsrille (40) aufgenommen wird.

11. Mechanismus gemäß einem der vorherigen Ansprüche, **dadurch gekennzeichnet, dass** die Rahmenplatte (16) aus ausgeschnittenem, geknicktem und / oder bombiertem Blech realisiert wird.

12. Mechanismus gemäß einem der vorherigen Ansprüche, **dadurch gekennzeichnet, dass** die Rahmenplatte (16) Mittel (62) für ihre Verbindung mit einem elastischen Antriebselement (60) des Schlittens umfasst.

13. Mechanismus gemäß einem der vorherigen Ansprüche, **dadurch gekennzeichnet, dass** das Profil (12) aus einem einzigen Stück insbesondere durch Extrusion oder durch Abformen realisiert wird.

14. Mechanismus gemäß einem der vorherigen Ansprüche, **dadurch gekennzeichnet, dass** das Profil (12) einen kontinuierlichen horizontalen unteren Flügel (22) umfasst, von dem aus sich die Stabilisierungsführungen in C-Form (24) erstrecken und dass die obere Seite des Profils (12) wenigstens einen länglichen Schlitz für den Durchgang der Schiene einer Klaue (18) nach außen umfasst, die die Rahmenplatte (16) mit dem Abwischorgan verbindet.

## Claims

1. A wiper mechanism (10) with alternating linear sweep of the type comprising:
- a guiding and driving carriage (14) which carries at least one wiping member (20), in particular a wiper arm or blade, and which is mounted slidably inside a rigid longitudinal guide rail produced in the form of a hollow profiled section (12);
- a chassis plate (16) of the carriage (14) housed at least partly inside the guide rail and which extends in a horizontal longitudinal plane substantially parallel to the wiping plane;
- two opposite C-shaped lateral runners (24) open transversely, provided either facing one another on the hollow profile or on the opposite lateral edges of the chassis plate (16);
- at least one complementary stabilisation element (50) received by the runners and either carried by the chassis plate (16) or produced in the form of a continuous horizontal flange of the hollow profiled section,
and of the type in which the chassis plate (16) carries longitudinal guide means (40) which cooperate with complementary means (38) of the profiled section (12, 22) in order to determine the transverse position of the chassis plate (16) with respect to the profiled section (12), **characterised in that** the means of transverse positioning of the chassis plate (16) with respect to the profiled section (12, 22) comprise a longitudinally oriented rigid rib (38) carried by the profiled section (12, 22), or by the chassis plate, which is received for longitudinal sliding in a vertical open complementary longitudinal groove (40) carried by the chassis plate (16), or the profiled section respectively, and **in that** each stabilisation element is a stabilisation shoe (50) which is received for longitudinal sliding inside the corresponding C-shaped runner (24).

2. A wiper mechanism according to the preceding claim, **characterised in that** the guide groove (40) belongs to the chassis plate (16) of the carriage (14) and is arranged under the bottom face (15) of this plate (16) in order to slidably receive a rib (38) formed in upward relief on an internal face 24) of the profiled section (12, 22).

3. A wiper mechanism according to the preceding claim, **characterised in that** the groove (40) belongs to a moulded element (42), in particular made from plastics material, attached to the chassis plate (16), in particular in the form of an element moulded onto the plate.

4. A wiper mechanism according to any one of the preceding claims, **characterised in that** each stabilisation shoe (50) is received without clearance, in the vertical direction, in the corresponding C-shaped runner (24).

5. A mechanism according to the preceding claim, **characterised in that** each shoe (50, 52) is elastically deformable to allow limited tilting of the chassis plate about a substantially longitudinal horizontal axis.

6. A mechanism according to any one of the preceding claims, **characterised in that** the external peripheral surface of each stabilisation shoe (50) which cooperates with the parallel and opposite internal horizontal faces (30, 34) of the corresponding C-shaped runner (24) comprises a covering (56) with a low coefficient of friction.

7. A mechanism according to any one of the preceding claims, **characterised in that** each stabilisation shoe (50) is in the general form of a flattened ring (52) which is mounted on a finger (54) of the chassis plate which extends transversely inside the corresponding C-shaped runner (24).

8. A mechanism according to any one of the preceding claims, **characterised in that** one of the parallel and opposite internal horizontal faces of the C-shaped runner (24) consists of the co-planar free edges (34) of two longitudinal ribs (32) of the profiled section (12, 22).

9. A mechanism according to any one of the preceding claims, **characterised in that** the chassis plate (16) of the carriage (14) carries three stabilisation shoes (50) arranged in a triangle, amongst which two of the shoes are slidably received in one of the runners (24), which the third stabilisation shoe is slidably received in the other one of the two C-shaped runners.

10. A mechanism according to any one of the preceding claims, **characterised in that** the guide rib (38) is received without clearance in the transverse direction inside the complementary guide groove (40).

11. A mechanism according to any one of the preceding claims, **characterised in that** the chassis plate (16) is produced from cropped sheet metal, bent and/or pressed.

12. A mechanism according to any one of the preceding claims, **characterised in that** the chassis plate (16) comprises means (62) for connection thereof with a flexible drive element (60) of the carriage.

13. A mechanism according to any one of the preceding claims, **characterised in that** the profiled section (12) is produced in a single piece, in particular by extrusion or moulding.

14. A mechanism according to any one of the preceding claims, **characterised in that** the profiled section (12) comprises a continuous horizontal bottom flange (22) from which the C-shaped stabilisation runners (24) extend, and **in that** the top face of the profiled section comprises at least one longitudinal slot for the passage to the outside of the rail of a shoe (18) which connects the chassis plate (16) to the wiper member.
